Europäisches Patentamt

European Patent Office

Office européen des brevets

(11) Publication number: **0 156 595 B1**

(12) **EUROPEAN PATENT SPECIFICATION**

(45) Date of publication of patent specification: **23.12.92** (51) Int. Cl.[5]: **C01B 33/26**

(21) Application number: **85301772.1**

(22) Date of filing: **14.03.85**

(54) **Process for preparing discrete, zeolite-containing particles.**

(30) Priority: **21.03.84 US 591723**

(43) Date of publication of application:
**02.10.85 Bulletin 85/40**

(45) Publication of the grant of the patent:
**23.12.92 Bulletin 92/52**

(84) Designated Contracting States:
**BE DE FR GB IT NL SE**

(56) References cited:
**EP-A- 0 110 650       DE-A- 2 051 448
US-A- 3 663 165       US-A- 4 081 514
US-A- 4 091 007       US-A- 4 175 114**

(73) Proprietor: **MOBIL OIL CORPORATION
150 East 42nd Street
New York New York 10017(US)**

(72) Inventor: **Rosinski, Edward Joseph
Box A
Pedricktown New Jersey 08067(US)**
Inventor: **Chu, Pochen
1173 Ollerton Road
West Deptford New Jersey 08066(US)**

(74) Representative: **Cooper, John Anthony et al
Mobil Court 3 Clements Inn
London WC2A 2EB(GB)**

EP 0 156 595 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

This invention relates to the preparation of discrete particles containing crystalline aluminosilicate zeolites, and especially zeolites having a silica to alumina mole ratio greater than 12 and a Constraint Index from 1 to 12.

Many crystalline zeolites are known. Some occur (at least so far) only in nature, for instance paulingite and merlinoite; some occur only as a result of synthesis, for instance zeolites A and ZSM-5: and some occur in both natural and synthetic forms, for instance mordenite, a synthetic counterpart of which is known as zeolon, and faujasite, synthetic counterparts of which are known as zeolites X and Y. Counterparts are of course demonstrated as such by correspondence of their X-ray diffraction data, the indicia by means of which the individuality of a zeolite is established. Such data are a manifestation of the particular geometry of the three-dimensional lattice, formed of $SiO_4$ and, optionally, $AlO_4$ tetrahedra crosslinked by the sharing of oxygen atoms and including sufficient cationic complement to balance the resulting negative charge on the $AlO_4$ tetrahedra, of which a zeolite consists. The ratio of total aluminum and silicon atoms to oxygen atoms is therefore 1:2.

Zeolites have a crystal structure that is capable of regulating the access to and egrees from the intracrystalline free space. This control, which is effected by the crystal structure itself, is dependent both upon the molecular configuration of the material which is or, alternatively, is not, to have access to the internal structure or pores of the zeolite and also upon the structure of the zeolite itself. The pores of the zeolite are in the form of channels formed by the regular disposition of the tetrahedra making up the anionic framework of the crystalline zeolite. A convenient measure of the extent to which a zeolite provides this control for molecules of varying sizes to its internal structure is provided by the Constraint Index of the zeolite: zeolites which provide highly restricted access to and egrees from the internal structure have a high value for the Constraint Index and zeolites of this kind usually have pores of small size. In contrast, zeolites which provide relatively free access to the internal zeolite structure have a low value for the Constraint Index.

Constraint Index values for some typical zeolites are as follows:

TABLE 1

| Zeolite | Constraint Index |
|---|---|
| ZSM-5 | 8.3 |
| Erionite | 38 |
| ZSM-11 | 8.7 |
| ZSM-35 | 6.0 |
| TMA Offretite | 3.7 |
| ZSM-38 | 2.0 |
| ZSM-12 | 2. |
| Beta | 1.6 |
| ZSM-4 | 0.5 |
| Acid Mordenite | 0.5 |
| REY | 0.4 |
| (Amorphous Silica-alumina | 0.6) |

The method by which Constraint Index is determined is described fully in U.S. Patent 4,016,218 to which reference is made for details of that method.

Because Constraint Index is related to the crystalline structure of the zeolite but is nevertheless determined by means of a test which exploits the capacity of the zeolite to engage in a cracking reaction, that is, a reaction dependent upon the possession of acidic sites and functionality in the zeolite, the sample of zeolite used in the test should be representative of zeolitic structure whose Constraint Index is to be determined and should also possess requisite acidic functionality for the test. Acidic functionality may, of course, be varied by artifices including base exchange, steaming or control of silica:alumina ratio.

The silica:alumina ratio of a zeolite is to be considered as the structural framework ratio, that is, the ratio of the $SiO_4$ to the $AlO_4$ tetrahedra which together constitute the structure of which the zeolite is composed. This ratio may vary from the silica:alumina ratio determined by various physical and chemical methods. For example, a gross chemical analysis may include aluminum which is present in the form of cations associated with the acidic sites on the zeolite, thereby giving a low silica:alumina ratio. Similarly, if the ratio is determined by thermogravimetric analysis (TGA) of ammonia desorption, a low ammonia titration may be obtained if cationic aluminum prevents exchange of the ammoniuum ions onto the acidic sites. These disparities are particularly troublesome when certain treatments such as dealuminization result in the presence of ionic aluminum free of the zeolite structure. Due care should therefore be taken to ensure that the framework silica:alumina ratio is correctly determined.

Methods for the synthesis of zeolites are described in the literature and are summarized in Breck, Zeolite Molecular Sieves, John Wiley & Sons, 1974, at Chapter 4. Generally, aluminosilicate zeolites crystallize from aqueous systems of high pH containing sources of silica and alumina, a source of a suitable cation, typically sodium, and generally a source of organic cations. The system is maintained under hydrothermal conditions, for example, from room temperature to 200°C or more, under autogenous pressure, until the crystalline product has formed.

When the zeolites have been prepared in the presence of organic cations, they are catalytically inactive, possibly because the intracrystalline free space is occupied by organic cations from the forming solution. They may be activated by heating in an inert atmosphere at 540°C for one hour, for example, followed by base exchange with ammonium salts followed by calcination at 540°C in air. The presence of organic cations in the forming solution may not be absolutely essential to the formation of the zeolite but it does appear to favor its formation.

Some zeolites exhibit extremely high silica-alumina ratios. One such zeolite is ZSM-5 described in U.S. Patent 3,702,886. That patent describes crystallization of ZSM-5 by hydrothermal treatment of a reaction mixture containing sources of silica and alumina, and an alkali metal oxide plus a quaternary ammonium compound such as tetrapropylammonium salt. A somewhat similar zeolite is ZSM-11 described in U.S. Patent 3,709,979, where a quaternary ammonium compound is also employed. U.S. Patent 3,941,871 is concerned with the special case of ZSM-5 in which the alumina content is vanishingly small, aptly called "organosilicate". Other zeolites, similar in structure to ZSM-5, include ZSM-11, ZSM-12 (U.S. Patent 3,832,449), ZSM-23 (U.S. Patent 4,076,842), ZSM-35 (U.S. Patent 4,016,245), ZSM-38 (U.S. Patent 4,046,859), ZSM-48 (U.S. Patent 4,397,827) and zeolite beta (U.S. Patent 3,308,069).

Zeolites are often combined with a porous matrix to provide a catalyst composition. The matrix tends to improve the activity and/or selectivity of the catalyst in certain organic conversion processes. Inert materials which serve as the porous matrix act as diluents to control the amount of conversion in a particular process so that products can be obtained economically and in an orderly manner without employing other means for controlling the rate of reaction. The material employed as the porous matrix may be active or inert. The porous matrix also functions as a binder for the zeolite to provide a composition having a good crush strength. Inorganic materials, especially those of a porous nature are preferred. Of these materials inorganic oxides such as clay, chemically treated clay, alumina, silica, silica-alumina and the like are particularly preferred because of the superior porosity, attrition resistance and stability they provide to the zeolitic composition. The zeolite can be combined, dispersed or otherwise intimately mixed with the porous matrix material in such proportions that the resulting product contains from 1 to 95% by weight, and preferably from 1 to 70% by weight, of the zeolite. For most commercial applications, the zeolite-porous matrix composite is provided as a hard aggregate of discrete particles in the form of extrudates, microspheres, tablets, pellets, granules and the like which substantially retain their shape and strength in use.

Techniques for incorporating zeolites in a matrix are conventional in the art as set forth in U.S. Patent 3,140,253.

U.S. Patent 4,091,007 describes a method of preparing ZSM-5 zeolite as a discrete particle having a crystallinity of greater than 40 percent by preforming the reaction mixture into pellets or extrudates which retain their shape and acquire substantial strength during the crystallization process. That reaction mixture contains a source of alkali metal cations and tetraalkylammonium cations, silica, alumina and water. The crystallized product can be handled in subsequent chemical processing such as ion exchange, without necessitating cumbersome processes such as filtration. Further, these discrete particles can be used directly as adsorbers or catalysts after appropriate processing but without the need of any reformulation or pelletizing since the non-crystalline portion of the discrete particle serves as a porous matrix.

U.S. Patent 4,175,144 states that zeolites such as ZSM-5 and ZSM-11 can be formed hydrothermally from reaction mixtures of elevated pH containing sources of silica and alumina and alkali metal oxide in the absence of quaternary ions. In one particular embodiment, that result is achieved by supplying seeds of the zeolite to a mixture of sources as above described.

European Patent Application 110,650 describes the preparation of ZSM-5 zeolite in the form of a powder from a reaction mixture containing ZSM-5 seeds and colloidal silica but which is substantially free of organic cations.

None of these prior publications describes an in situ method for preparing discrete particles in pellet or extrudate form containing substantial quantities of high silica zeolite prepared without employing organic compounds in the reaction mixture.

Although zeolites have been described above in terms only of aluminosilicate zeolites, it is well known that zeolites that are isomorphous with the aluminosilicates but contain other elements in place of the silicon and/or aluminum, exist also. Thus, germanium is a well recognized substitute for silicon in the crystal framework of tetrahedra linked by shared oxygen atoms - see, for example, U.S. Patent 3,702,886 and 3,709,979 which also describe how gallium oxide may take the place of alumina. Breck has also reported such substitution of iron, tetrahedrally coordinated phosphorus in the crystal framework, and gallium. Borosilicate zeolites have also been described. Further, a method for preparing various zeolites, including ZSM-5, which contain tetrahedrally coordinated transition metals in the crystal framework, is described in U.S. Patent 3,530,064.

The extensive surface area provided by the pores of zeolites has been shown to have potent catalytic effects, particularly towards hydrocarbons. For many types of conversions, advantage can be taken of the simultaneous molecular sieve effect and unique catalytic capabilities to achieve shape selective catalysis not available with other catalysts. As the silica/alumina (or equivalent) ratio is increased, the zeolites become distinctly hydrophobic, permitting chemical conversions and adsorptions based, in whole or in part, on functionality of the molecules in a mixture under treatment.

Zeolite ZSM-5 has been shown to be a particularly useful catalyst in reactions involving aromatic compounds, with emphasis on those having a single carbocycle. Thus ZSM-5 exhibits unique selectivity in the conversion of olefins, naphthenes, alcohols, ethers and alkanes into aromatic compounds and in such reactions as isomerization, alkylation, dealkylation and transalkylation of aromatics. That favorable influence on aromatic conversion reactions is found also in the forms of ZSM-5 in which another metal appears in isomorphic substitution for aluminum, as described in U.S. Patent 4,163,028. The other high silica zeolites described above have also been shown to be particularly useful catalysts, usually in the same type of conversions in which ZSM-5 has been usefully employed.

The present invention seeks to provide a process for the preparation of discrete, high-silica zeolite-containing particles similar to that described in U.S. Patent 4,091,007 referred to above, but without the use of an organic compound in the zeolite-forming reaction mixture. By employing high silica zeolite seeds in preparing the preformed composite particles, a highly crystalline product is obtained by means of an in situ crystallization in the absence of the organic compounds required in other high-silica zeolite syntheses. Following the preforming operation, the discrete particles are calcined and then contacted with an alkali metal hydroxide solution to achieve the desired degree of crystallization. The integrity of the composite particles is retained during the crystallization to provide a zeolite composition in particulate form which is attrition resistant and highly stable.

According to the invention, there is provided a process for preparing discrete particles containing a crystalline zeolite having a silica to alumina mole ratio greater than 12 and a Constraint Index of 1 to 12 by reacting together under hydrothermal conditions a mixture comprising water and sources of silica, alumina and alkali cations, which comprises:

(a) mixing together seeds of a zeolite having a silica to alumina mole ratio greater than 12 and a Constraint Index of 1 to 12, a source of silica, a source of alumina and water and forming the mixture into discrete particles;

(b) thermally treating the discrete particles to form hard, dry, attrition resistant particles;

(c) mixing the attrition resistant particles with a source of alkali cations to form an aqueous reaction mixture having a composition effective to form the zeolite of the seeds;

(d) maintaining the aqueous reaction mixture under hydrothermal conditions to form the zeolite in the discrete particles; and

(e) recovering discrete particles having the zeolite formed therein.

In the process of the invention no organic cation is employed in the crystallization reaction. Discrete particles are formed including a source of silica, a source of alumina, water and high silica zeolite seeds. These particles, in the form of extrudates, microspheres, tablets, pellets or the like, are then thermally treated to remove excess water and to provide hard, dry particles having high attrition resistance and good crush strength. To form the high silica zeolite; these hard discrete particles are contacted with an alkanizing solution under conditions to effect the desired crystallization. This process enables a catalyst composition to be obtained, containing a maximum of 60% by weight high-silica zeolite in a porous matrix.

The source of alumina may be an alumina-containing clay or an aluminosilicate material such as a natural zeolite which becomes amorphous upon calcination. The generic term "clay" is meant to include alumina-containing clays such as kaolinite, halloysite, montmorillonite, illite, dickite, attapulgite, and others. Although the zeolite crystalline aluminosilicate can be prepared using either the raw clay or a thermally or hydrothermally treated clay, it is preferred that the clay is given a thermal treatment at a temperature of 540°C or more. It is also intended that chemically treated clays may be utilized in this process.

All of the alumina required in the reaction mixture may be provided by a clay or, where desired, an additional source of alumina, such as sodium aluminate, aluminum sulfate or other aluminum salt, may be provided.

The source of silica in the reaction mixture may consist of both a clay and a non-clay material or a clay alone. Typical non-clay material that can be employed are Ludox, aqueous dispersions of colloidal silica, water glass, sand, silica gel, fumed silica, silica hydrosol and finely-divided precipitated silicas such as Hi-Sil, Quso, and Zeosyl 100.

The alkali cations employed may be ammonium, sodium, potassium, lithium, rubidium, cesium or mixtures of thereof with ammonium and sodium being preferred. Solutions of alkali metal hydroxide and ammonium hydroxide may be especially usefully employed to supply the required cations.

The water content of the forming mixture will depend on the final physical form of the particles desired. It is preferred to have less than 50 weight percent of water in the reaction mixture when preparing aggregates in the form of extrudates, tablets, spheroids, or granules. For each form of the aggregate, some adjustment in water content, below 50 weight percent, will be made to impart the best physical properties to the mixture. For example, less water is desired for tableting the mixture than for extruding it. On the other hand, if the mixture is to be spray dried to form microspheres, enough water has to be added to prepare a slurry that is sufficiently fluid to be pumped through the spraying nozzle. Water in the forming mixture will be completely evaporated during the drying and hardening step. Additional water has to be added to cover the formed particles and to dissolve hydroxides of ammonium and alkali metals during the final crystallization step. This water used in the crystallization step constitutes the water required by the specific mole ratios for the particular zeolite being formed.

For some catalytic or adsorption applications, it will be desirable to incorporate substantially nonreactive solid powders into the reaction mixture. These powders are selected on the basis of the particular physical property that it is desired to impart to the final product. For example, solid powders may be added to increase density, modify catalytic activity, increase heat capacity or modify porosity of the final particle, or act as a diluent for the crystalline aluminosilicate in the product. Examples of solid powders which may be used include alpha alumina, titania, zirconia, zircon, barium sulfate, and metallic nickel. It is to be understood that substantially inactive "weighting agents" such as inactive alumina (for example, alpha alumina) and sand may also be used.

Zeolite ZSM-5, in its anhydrous state, is identified in the literature in terms of mole ratios of its constituent oxides, as follows:

$$(0.9 \pm 0.2)M_{2/n}\,O:Al_2O_3: x\,SiO_2$$

in which M is a mixture of alkali metal, especially sodium, and tetraalkylammonium the alkyl groups of which preferably contain 2 to 5 carbon atoms, n is the valence of M and $x$ is at least 5.

The ZSM-5 synthesized in the process of the invention will have the same characteristic formula but in which M is an alkali metal, ammonium or mixture thereof, and X is at least 12.

The high-silica zeolites with which the invention is concerned, such as ZSM-5, possess a definite distinguishing crystalline structure whose X-ray diffraction pattern has significant lines from which the following interplanar spacings d (in Angstroms) and relative intensities can be derived:

TABLE 2

| Interplanar Spacing d(A) | | Relative Intensity |
|---|---|---|
| 11.1 | ± 0.2 | S |
| 10.0 | ± 0.2 | S |
| 7.4 | ± 0.15 | W |
| 7.1 | ± 0.15 | W |
| 6.3 | ± 0.1 | W |
| 6.04 | ± 0.1 | W |
| 5.97 | | |
| 5.56 | ± 0.1 | W |
| 5.01 | ± 0.1 | W |
| 4.60 | ± 0.08 | W |
| 4.25 | ± 0.08 | W |
| 3.85 | ± 0.07 | VS |
| 3.71 | ± 0.05 | S |
| 3.04 | ± 0.03 | W |
| 2.99 | ± 0.02 | W |
| 2.94 | ± 0.02 | W |

These values were determined by standard techniques. The radiation was the K-alpha doublet of copper, and a scintillation counter spectrometer with a strip chart pen recorder was used. The peak heights, I, and the positions as a function of 2 times theta, where theta is the Bragg angle, were read from the spectrometer chart. From these, the relative intensities, $100 \ I/I_o$, where $I_o$ is the intensity of the strongest line or peak, and d, the interplanar spacing in A, corresponding to the recorded lines, were calculated. In Table 2, the relative intensities are given in terms of symbols s = strong, w = weak and vs = very strong.

One of the high-silica zeolites, ZSM-5, has been prepared hitherto from a reaction mixture containing tetrapropylammonium hydroxide, sodium oxide, an oxide of aluminum, an oxide of silica, and water and having a composition falling within the following ranges:

TABLE 3

| | Broad | Preferred | Particularly Preferred |
|---|---|---|---|
| $OH^-/SiO_2$ | 0.07-10.0 | 0.1-0.8 | 0.2-0.75 |
| $R_4N^+/R_4N^+ + Na^+)$ | 0.01-0.95 | 0.02-0.9 | 0.02-0.08 |
| $H_2O/OH^-$ | 10-300 | 10-300 | 10-300 |
| $SiO_2/Al_2O_3$ | = 5 | 5-300 | 15-300 |

in which R is propyl, by maintaining the mixture until crystals of the zeolite are formed. Tetrapropylammonium ions can be supplied by the addition of tetrapropylammonium halide. If an excess of tetrapropylammonium hydroxide is used which would raise the value of $OH^-/SiO_2$ above the ranges set forth above, the excess hydroxide can be neutralized by adding an appropriate amount of acid to maintain the $OH^-/SiO_2$ ratio within the required range. The resulting crystals are then separated from the liquid and recovered. Typical reaction conditions consist of heating the reaction mixture to a temperature of 75 to 205°C for a period of time of one hour to 60 days. A more preferred temperature is 90 to 175°C with the amount of time at a temperature in such range being from 1 hour to 20 days.

Other high-silica zeolites have been prepared in a similar fashion employing mixtures having compositions whose mole ratios of components fall within specific ranges described in the art.

Early synthesis of ZSM-5 zeolite and other high-silica zeolites was accomplished by including amines, quaternary ammonium compounds, quaternary phosphonium compounds or the like in the reaction mixture. These have been considered to be "templates" which directed the course of crystallization to the particular desired crystal framework. Such compounds are cationic in nature and occupy positions in the crystalline product to balance the electronegative character of tetrahedrally coordinated aluminum or other element substituted for aluminum. On dehydration of the zeolite, these bulky cations occupy spaces which inhibit flow of fluids (gases or liquids) in the pores for adsorption, catalysis or ion exchange. Typically, tetrapropyl ammonium cations have been removed from ZSM-5 zeolites by combustion in air at elevated temperature to facilitate removal of sodium cations by ion exchange.

Such organic template compounds are not included in the reaction mixtures of the invention since their use would involve an unnecessary expense and would impose unnecessary processing steps.

According to the invention, the reaction mixture is substantially free of organic compounds of nitrogen or phosphorus, paticularly those which form cations in aqueous solution. The reaction mixture therefore consists essentially of inorganic reagents in the sense that any organic material present is adventitious and/or does not enter into or direct the crystallization process. The products obtained according to the invention are therefore substantially free of organic cations.

The high-silica zeolites prepared by the process of the invention possess a silica to alumina mole ratio of at least 12. Preferably, however, that ratio is greater than 30 and may be considerably higher.

In accordance with the invention, the reaction mixture obtained by addition of the source of alkali cations and water to the dry, hard, attrition resistant particles, suitably has a composition in terms of mole ratios, for each of the designated high-silica zeolites, as follows:

## TABLE 4

| ZSM-5 | Broad | Preferred | Particularly Preferred |
|---|---|---|---|
| $SiO_2/Al_2O_3$ | 2-100 | 2.5-60 | 3-40 |
| $OH^-/SiO_2$ | 0.01-1.0 | 0.1-0.8 | 0.1-0.5 |
| $H_2O/OH^-$ | 10-1000 | 20-500 | 50-200 |
| Seeds (wt.%) | 0.01-20 | 0.5-10 | 1-5 |
| **ZSM-11** | | | |
| $SiO_2/Al_2O_3$ | 2-100 | 2.5-60 | 3-40 |
| $OH^-/SiO_2$ | 0.01-1.0 | 0.1-0.8 | 0.1-0.5 |
| $H_2O/OH^-$ | 10-1000 | 10-500 | 20-300 |
| Seeds (wt.%) | 0.01-20 | 0.5-10 | 1-5 |
| **ZSM-12** | | | |
| $SiO_2/Al_2O_3$ | 2-100 | 2.5-60 | 3-40 |
| $OH^-/SiO_2$ | 0.01-1.0 | 0.1-0.5 | 0.1-0.3 |
| $H_2O/OH^-$ | 10-1000 | 20-500 | 50-200 |
| Seeds (wt.%) | 0.01-20 | 0.5-10 | 1-5 |
| **ZSM-23 or Zeolite Beta** | | | |
| $SiO_2/Al_2O_3$ | 2-100 | 2.5-60 | 3-40 |
| $OH^-/SiO_2$ | 0.01-1.0 | 0.05-0.5 | 0.05-0.3 |
| $H_2O/OH^-$ | 10-600 | 20-500 | 50-200 |
| Seeds (wt.%) | 0.01-20 | 0.5-10 | 1-5 |
| **ZSM-35 or ZSM-38** | | | |
| $SiO_2/Al_2O_3$ | 2-100 | 2.5-60 | 3-40 |
| $OH^-/SiO_2$ | 0.05-0.5 | 0.07-0.5 | 0.1-0.3 |
| $H_2O/OH^-$ | 10-500 | 20-250 | 40-100 |
| Seeds (wt.%) | 0.01-20 | 0.5-10 | 1-5 |
| **ZSM-48** | | | |
| $SiO_2/Al_2O_3$ | 2-100 | 2.5-60 | 3-40 |
| $OH^-/SiO_2$ | 0.01-0.5 | 0.05-0.5 | 0.1-0.3 |
| $H_2O/OH^-$ | 20-20,000 | 50-500 | 50-200 |
| Seeds (wt.%) | 0.01-20 | 0.5-10 | 1-5 |

The high-silica zeolite seed crystals included in the discrete particles may be a portion of the wet product as separated from a high-silica zeolite synthesis performed according to any of the prior art procedures or may be crystals which have been ion exchanged and/or calcined in any desired manner. The quantity of seeds employed may vary within wide limits, but will generally be at least 0.01 weight percent of seeds based on the total weight of silica, alumina and seeds. Although the presence of high-silica zeolite

8

seeds is critical to the success of the synthesis, the quantity of the seeds employed is not per se critical. However, this latter factor does become important in controlling the size of the high-silica zeolite formed.

In general it has been found that lower reaction temperatures favor production of zeolites of smaller crystal size in the practice of the invention. A further control can be imposed by control of quantity of seed crystals. At relatively small proportions of seed, about 1 to 5% by weight, the process yields a product of larger size than the seeds. At larger quantities of seed, in the approximate range of 3 to 10%, the process tends to yield a product of about the same crystal size as the seed crystals.

In the process of the invention, the mixture of seeds, sources of silica and alumina and water is preformed into discrete particles by procedures such as extrusion, spray drying, tabletting and the like. The discrete particles are then subjected to a thermal treatment, for example, at about 540°C, such as calcining, to provide a dry, hard particle. Temperatures of 1000°C and above may be employed. These particles retain their shape and acquire substantial strength in the crystallization process.

The discrete particles are then added to an alkaline aqueous solution containing sufficient alkali hydroxide that the mixture with blended solids will have a pH between 7.5 and 13.0. In addition to the function of controlling pH, the alkalizing agent also serves to supply the necessary cations to balance such electronegative character as may be found in the crystal framework.

The reaction mixture containing the discrete particles is agitated to promote mixing and raised in temperature to hydrothermal conditions conducive to formation of the desired high-silica zeolite, in the general range of 75 to 200°C. Agitation is continued while the mixture is maintained under autogenous pressure until the zeolite crystals are formed in the discrete particles, a period of a few hours to several days.

The crystallized product can then be readily handled in any subsequent chemical processing, such as ion exchange, without necessitating such cumbersome processes as filtration. Furthermore, the discrete particles can be directly used as adsorbents or catalysts after the appropriate processing but without need of any reformulation or pelletizing since the non-crystalline portion of the particle serves as the matrix.

The particular high-silica zeolite formed depends upon the composition of the discrete particles before crystallization and the nature of the zeolite seeds contained in those particles. The composition of the discrete particles and the source of the alkali metal cation should provide a composition effective to form the particular high-silica zeolite desired and the seeds employed should be of that same zeolite. Thus if the zeolite in the final discrete particle product is to be ZSM-12, ZSM-12 zeolite seeds should be included in the composition of the discrete particles when they are initially formed and the thermally treated discrete particles (prior to crystallization) together with the source of alkali metal cations should provide a composition within the mole ratio range for ZSM-12 as they appear in Table 4 above.

In the process of this invention, the reaction mixture is essentially free of organic reagents such as the amines and quaternary ammonium compounds used in many prior art preparations. Thus, the invention avoids the consumption of expensive organic reagents and avoids the downstream processing steps necessary to remove organic cations from the product.

High-silica zeolites prepared according to the invention can be employed in the form in which they are synthesized or can be converted into forms through ion exchange in accordance with known techniques, to prepare catalytically active compositions. These zeolite compositions can be ion exchanged to remove at least a portion of the alkali metal cations and converted into forms which tend to be more catalytically active and stable. The alkali metal cations, especially the sodium and potassium cations, can be exchanged for hydrogen ions by treating the zeolite with acids. Alternatively, the zeolite can be treated with a source of ammonium, alkylammonium or arylammonium, provided that steric hinderance does not prevent the cation from entering the pores of the zeolite. If the alkali metal is replaced by an ammonium cation or complex, the hydrogen form is prepared therefrom by heating the exchanged composition to a temperature above 200°C causing evolution of ammonia and retention of a proton in the composition, at the site previously occupied by the ammonium ion.

Other replacing cations include cations of Groups IB- VIII of the Periodic Table, especially metals of Groups II and III, including the rare earth metals, tin, lead, Group IVB comprising titanium, zirconium, and hafnium; metals of the actinide series, antimony, bismuth, chromium, also Group VIIB and Group VIII. Regardless of the cations replacing the alkali metal cations in the freshly synthesized form of the zeolites, the spatial arrangement of the aluminum, silicon and oxygen atoms, which form the basic crystal lattice of the zeolite, remains essentially unchanged by the replacement of sodium, as determined by X-ray diffraction analysis of the ion exchanged material.

Ion exchange of the zeolites can be accomplished conventionally by contacting the zeolite with a solution, suitably an aqueous solution, of a salt of the exchanging cation. Additionally, the composition can undergo solid state exchange to remove sodium and substitute another cation therefor. Preferably, solution exchange is employed.

While water will ordinarily be the solvent in the ion exchange solution employed, other solvents, although generally less preferred, can be used. Thus, in addition to an aqueous solution, alcohol solutions of the exchange compounds can be employed in producing a catalyst composition. Generally, the alkali metal content is reduced to less than 3 weight percent. When the exchanged aluminosilicate is prepared, it is generally, thereafter, treated with a suitable solvent, for example, water, to wash out any of the anions which may have become temporarily entrained or caught in the pores or cavities of the crystalline composition.

Calcination of the high silica zeolites of this invention may be utilized to place the zeolite in an activated form. The zeolite being calcined may be in its freshly prepared form or in its ion-exchanged form. Calcination may be conducted in air or other inert gas at temperatures of 260 to 820°C for periods of time from 1 to 48 hours or more.

The high-silica zeolites prepared by the process of the invention are valuable catalysts in various organic compound conversion processes. Such processes include, for example, alkylation of aromatics with olefins, aromatization of normally gaseous olefins and paraffins, aromatization of normally liquid low molecular weight paraffins and olefins, isomerization of aromatics, paraffins and olefins, disproportionation of aromatics, transalkylation of aromatics, oligomerization of olefins and cracking and hydrocracking. Other catalytic processes where these zeolites may be employed are described in the art. The zeolite is usually employed in its calcined form and may have been ion-exchanged before the calcination.

The following Examples illustrate the invention. ZSM-5 is the high-silica zeolite that is the subject of the Examples. Discrete particles containing any of the other high-silica zeolites may be prepared and employed in a similar fashion by making appropriate modifications to the composition of the reaction mixture and employing seeds of the high-silica zeolite of interest.

Example 1

A base catalyst in the shape of an extrudate was prepared by mulling 1000 g of kaolin clay (S.A.F. type, 85% solid), 977 g of a commercial brand of finely divided solid silica known as Hi-Sil (EP type, 87% solid), 90 g of ZSM-5 seeds (0.02 μm, 100% solid) and 1500 g of $H_2O$ for about 30 minutes and then extruding the mixture into 3.2 mm extrudates. The seeds constituted 5 wt.% of the total solids. The dried extrudates were hardened by calcination at 980°C for 3 hours in air. One hundred parts of the calcined extrudates were added to a solution of 220 parts of $H_2O$ and 4 parts of NaOH. The mixture was then heated in an autoclave at 100°C for 16 hours and at 150°C for 4 days. The resultant extrudate was water washed, dried and crushed to determine its crystallinity. The product was determined, by x-ray diffraction analysis, to be 40% by weight ZSM-5. The dried extrudate had a crushing strength of 690 kPa. Pore volume was 0.43 ml/g. The $NH_4$ exchanged, air calcined (3 hours at 540°C) extrudate had an alpha activity of 154.

Example 2

The same calcined extrudates and solution described in Example 1 were heated in an autoclave at 100°C for 14 days. The resultant washed and dried extrudates contained about 10% ZSM-5 crystals.

Example 3

A base catalyst in the shape of an extrudate was prepared by the method described in Example 1 except that ZSM-5 seeds were not added. The extrudates were calcined and subjected to crystallization by the procedure described in Example 1. The final extrudates contained no ZSM-5 but some unidentified crystalline material.

Example 4

A microspherical form of the ZSM-5 aggregate was prepared by spray drying a mixture of 5000 gm of kaolin (U.F. grade), 4800 gm of 30% colloidal $SiO_2$, 283 gm of ZSM-5 seeds (5% weight based on total solids) and 1000 g of $H_2O$. The resultant ZSM-5 microspheres were also precalcined at 980°C for 3 hours. The crystallization of microspheres to ZSM-5 followed the conditions described in Example 1 for the extrudates. The microsphere product was analyzed by x-ray diffraction analysis and found to contain 35% by weight ZSM-5.

Example 5

The same calcined microspheres and solution described in Example 4 were heated in an autoclave at 100°C for 14 days. The final washed and dried extrudates contained about 10% ZSM-5 material.

Example 6

A microspherical form of the ZSM-5 aggregate was prepared by spray drying the composition described in Example 4 except that ZSM-5 seeds were not added. The calcination and crystallization of these microspheres follow the conditions described in Example 1. The final product contained only some unidentified crystalline material.

Example 7

The discrete particle product of Example 4 was steam activated and evaluated in a series of runs where a gas oil was catalytically cracked. The gas oil employed was a sour heavy gas oil. In Run 1, this gas oil was cracked with a commercial zeolite-containing cracking catalyst supplied by Filtrol Corporation. In Run 2, 0.5 wt.% of the steam activated product of Example 4 was added to the commercial zeolite cracking catalyst while in Run 3, 2 wt.% of the steam activated product of Example 4 was added to the commercial zeolite cracking catalyst. The results of these three runs are presented in Table 5.

TABLE 5

| RUN | | 1 Commercial Catalyst | 2 Commercial Catalyst Plus | 3 Commercial Catalyst Plus |
|---|---|---|---|---|
| | | - | Ex. 4 Product | Ex. 4 Product |
| | | - | 0.5 wt.% | 2.0 wt.% |
| ZSM-5 added Amount | | | | |
| CONDITIONS | - WHSV | 10.0 | 10.4 | 9.70 |
| | - C/O Ratio | 2.50 | 2.49 | 2.57 |
| | - TEMP., °C | 483 | 480 | 482 |
| CONVERSION, VOL.% | | 61.5 | 61.5 | 60.6 |
| $C_5$ + GASOLINE, VOL.% | | 53.4 | 53.8 $\Delta^*$ +0.4 | 48.5 $\Delta$ -4.9 |
| TOTAL $C_4$'s, VOL.% | | 10.1 | 11.6 $\Delta$ +1.5 | 16.7 $\Delta$ +6.6 |
| DRY GAS, WT.% | | 6.6 | 6.6 $\Delta$ 0 | 6.3 $\Delta$ -0.3 |
| COKE, WT.% | | 2.41 | 2.24 $\Delta$ -0.17 | 2.8 $\Delta$ +0.4 |
| $H_2$, WT.% | | 0.12 | 0.11 | 0.09 |
| COKE ON CAT.,WT.% | | 0.868 | 0.811 | 0.986 |
| RECOVERY, WT.% | | 97.3 | 97.3 | 94.8 |
| $C_5$ + GASOLINE, O.N.(R+O) | | 84.8 | 85.0 $\Delta$ +0.2 | 88.1 $\Delta$ +3.3 |

*$\Delta$ = difference from Run 1.

Claims

1. A process for preparing discrete particles containing a crystalline zeolite having a silica to alumina mole ratio greater than 12 and a Constraint Index of 1 to 12 by reacting together under hydrothermal conditions a mixture comprising water and sources of silica, alumina and alkali cations, which comprises:

(a) mixing together seeds of a zeolite having a silica to alumina mole ratio greater than 12 and a Constraint Index of 1 to 12, a source of silica, a source of alumina and water and forming the mixture into discrete particles;

(b) thermally treating the discrete particles to form hard, dry, attrition resistant particles;

(c) mixing the attrition resistant particles with a source of alkali cations to form an aqueous reaction mixture having a composition effective to form the zeolite of the seeds;

(d) maintaining the aqueous reaction mixture under hydrothermal conditions to form the zeolite in the discrete particles; and

(e) recovering discrete particles having the zeolite formed therein.

2. A process according to Claim 1, including the further step of calcining the discrete particles.

3. A process according to Claim 1 or Claim 2 including the further step of subjecting the zeolite within the discrete particles to ion exchange to replace the alkali cations at least in part by cations of a metal or hydrogen.

4. A process according to any one of Claims 1 to 3, wherein the source of alumina is an alumina-containing clay selected from kaolin, halloysite and montmorillonite, or an aluminosilicate.

5. A process according to any one of Claims 1 to 4, wherein the source of silica comprises a silica-containing clay, fumed silica or silica hydrosol.

6. A process according to any one of Claims 1 to 5, wherein the reaction mixture of steps (c) and (d) is essentially free from organic cations.

7. A process according to any one of Claims 1 to 6, wherein the final discrete particles have a zeolite content of not more than 60% by weight.

8. A process according to any one of Claims 1 to 7, wherein the discrete particles are in the form of extrudates, pellets, tablets or microspheres.

**Patentansprüche**

1. Verfahren zur Herstellung einzelner Partikel, die einen kristallinen Zeolith mit einem Siliciumdioxid/Aluminiumoxid-Molverhältnis von mehr als 12 und einem Zwangsindex von 1 bis 12 enthalten, bei dem eine Mischung bei hydrothermischen Bedingungen reagiert, die Wasser und Quellen von Siliciumdioxid, Aluminiumoxid und Alkalikationen umfaßt, wobei dieses Verfahren umfaßt:

(a) Mischen von Kristallkeimen des Zeolith mit einem Siliciumdioxid/Aluminiumoxid-Molverhältnis von mehr als 12 und einem Zwangsindex von 1 bis 12, einer Quelle von Siliciumdioxid, einer Quelle von Aluminiumoxid und Wasser und Formen der Mischung zu einzelnen Partikeln;

(b) thermische Behandlung der einzelnen Partikel, um harte, trockene, abriebbeständige Partikel zu bilden;

(c) Mischen dieser abriebbeständigen Partikel mit einer Quelle von Alkalimetallkationen, um eine wäßrige Reaktionsmischung zu bilden, die eine wirksame Zusammensetzung aufweist, um den Zeolith der Kristallkeime zu bilden;

(d) Halten der wäßrigen Reaktionsmischung bei hydrothermischen Bedingungen, um den Zeolith zu einzelnen Partikeln zu formen; und

(e) Gewinnung der einzelnen Partikel mit dem darin gebildeten Zeolith.

2. Verfahren nach Anspruch 1, das den weiteren Schritt der Kalzinierung der einzelnen Partikel umfaßt.

3. Verfahren nach Anspruch 1 oder 2, das einen weiteren Schritt umfaßt, bei dem der Zeolith innerhalb der einzelnen Partikel dem Ionenaustausch unterzogen wird, um die Alkalikationen zumindest teilweise durch Kationen eines Metalls oder Wasserstoff zu ersetzen.

4. Verfahren nach einem der Ansprüche 1 bis 3, worin die Quelle von Aluminiumoxid ein Aluminiumoxid enthaltender Ton, der aus Kaolin, Halloysit und Montmorillonit ausgewählt ist, oder ein Aluminosilicat ist.

5. Verfahren nach einem der Ansprüche 1 bis 4, worin die Quelle des Siliciumdioxids einen Siliciumdioxid enthaltenden Ton, Kieselpuder oder Silicium-dioxid-Hydrosol umfaßt.

EP 0 156 595 B1

**6.** Verfahren nach einem der Ansprüche 1 bis 5, worin die Reaktionsmischung der Schritte (c) und (d) im wesentlichen frei von organischen Kationen ist.

**7.** Verfahren nach einem der Ansprüche 1 bis 6, worin die einzelnen Endpartikel einen Zeolithgehalt von nicht mehr als 60 Gew.-% aufweisen.

**8.** Verfahren nach einem der Ansprüche 1 bis 7, worin die einzelnen Partikel in Form von Extrudaten, Pellets, Tabletten oder Mikrosphären vorliegen.

**Revendications**

**1.** Procédé de préparation de particules discrètes contenant une zéolite cristalline présentant un rapport molaire silice/alumine supérieur à 12 et un indice de contrainte compris entre 1 et 12, par réaction dans des conditions hydrothermiques d'un mélange comprenant de l'eau et des sources de silice, d'alumine et de cations alcalins, lequel procédé consiste à:
a) mélanger entre eux des germes de zéolite présentant un rapport molaire silice/alumine supérieur à 12 et un indice de contrainte entre 1 et 12, une source de silice, une source d'alumine et de l'eau et façonner le mélange sous forme de particules discrètes;
b) traiter thermiquement les particules discrètes pour former des particules résistant à l'attrition, dures et sèches;
c) mélanger les particules résistantes à l'attrition avec une source de cations alcalins pour former un mélange de réaction aqueux présentant une composition efficace pour former la zéolite des germes;
d) maintenir le mélange de réaction aqueux dans les conditions hydrothermiques pour former la zéolite sous forme de particules discrètes; et
e) récupérer les particules discrètes ayant la zéolite ainsi formée.

**2.** Un procédé selon la revendication 1, incluant l'étape ultérieure de calcination des particules discrètes.

**3.** Un procédé selon la revendication 1 ou la revendication 2, incluant l'étape supplémentaire de traitement de la zéolite dans les particules discrètes par échange ionique pour remplacer les cations alcalins, au moins en partie, par des cations métalliques ou d'hydrogène.

**4.** Un procédé selon l'une quelconque des revendications 1 à 3, caractérisé en ce que la source d'alumine est une argile contenant de l'alumine choisie dans le groupe comprenant le kaolin, l'halloysite et la montmorillonite ou un aluminosilicate.

**5.** Un procédé selon l'une quelconque des revendications 1 à 4, caractérisé en ce que la source de silice est formée d'une argile contenant de la silice, de la silice fumée ou de l'hydrosol de silice.

**6.** Un procédé selon l'une quelconque des revendications 1 à 5, caractérisé en ce que le mélange réactionnel de l'étape (c) et (d) est essentiellement exempt de cations organiques.

**7.** Un procédé selon l'une quelconque des revendications 1 à 6, caractérisé en ce que les particules discrètes finales ont une teneur en zéolite non supérieure à 60% en poids.

**8.** Un procédé selon l'une quelconque des revendications 1 à 8, caractérisé en ce que les particules discrètes sont sous la forme d'extrudats, de pastilles, de comprimés ou de microsphères.

13